# EUROPEAN PATENT SPECIFICATION

(11) **EP 1 070 004 B1**
(45) Date of publication and mention of the grant of the patent: **04.06.2003**
(21) Application number: 99921320.0
(22) Date of filing: 26.03.1999
(51) Int. Cl.: B60R 21/20

(54) **AN AIRBAG ARRANGEMENT**
AIRBAGANORDNUNG
AGENCEMENT DE COUSSIN GONFLABLE DE SECURITE

(30) Priority: 06.04.1998 GB 9807366
(43) Date of publication of application: 24.01.2001
(73) Proprietor: AUTOLIV DEVELOPMENT AKTIEBOLAG, 447 83 Vargarda (SE)
(72) Inventor: BAILLIVET, Remi, F-76220 Dampierre-en-Bray (FR); MAURIN, Stéphane, F-76220 Ferrières-en-Bray (FR); COLIN, Xavier, F-86000 Poitiers (FR); BONNIN, Stéphane, F-86190 Lataille (FR)
(74) Representative: Frankland, Nigel Howard
(86) International application number: SE9900480
(87) International publication number: WO99051465

(56) References cited:
- EP-A2- 0 806 335
- DE-C1- 19 725 684
- GB-A- 2 303 827
- US-A- 5 380 037
- US-A- 5 423 568
- US-A- 5 427 406

## Description

THIS INVENTION relates to an airbag arrangement.

It has been proposed to provide an airbag unit which is mounted on and connected to the hub of a steering wheel. During inflation, such an airbag undergoes rapid acceleration in a direction along the axis of the steering column supporting the steering wheel, and consequently momentum is imparted to the fabric of the bag and the gas within the bag. The momentum which the airbag has, at full inflation, causes high axial outward forces to be applied to the connectors between the airbag unit and the steering wheel.

Traditional snap-joint connectors used to attach airbags to a steering wheel may be subject to failure when high forces are applied. US-5,380,037 A discloses an arrangement in which an airbag unit has a plurality of downwardly extending legs. Each leg has a horizontally extending slot formed in one side of the leg. The leg is passed through a hole in a horizontal plate. There is a spring in the form of an elongate wire element located beneath the plate. As the leg passes through the hole in the plate, the spring is biased so that part of the spring moves horizontally into the slot in the leg, thus locking the leg in position, with a snap action.

The disadvantage of this arrangement is that the wire elements are not particularly strong, and when the airbag is fully inflated, the force applied to legs may break the wire elements, with the result that the airbag unit breaks free of the steering wheel.

Another attachement of an airbag unit to a steering wheel is known from GB 2303827 A, which discloses all features of the preamble of claim 1.

According to the invention there is provided an airbag arrangement comprising: a steering wheel having a rim and a hub, an exterior part of the steering wheel being sheathed with a resilient material, the steering wheel being adapted to be mounted by means of the hub to a steering column; an airbag unit having a housing, the housing containing a gas generator and airbag, and having a cover with at least one extension which extends beyond the housing; engagement means on the hub of the steering wheel and co-operating engagement means on the airbag unit; the engagement means on the hub having faces which face towards the steering column in the direction of the axis of the steering column: the engagement means carried by the airbag unit having faces which face away from the steering column in the direction of the axis of the steering column; wherein locking means are provided to secure the airbag unit in position when mounted on the steering wheel, the locking means comprise two elements adapted to engage each other to secure the air-bag in position, the elements being carried respectively by the steering wheel and the air-bag unit, one element being carried by a flexible extension to provide a snap action, the said at least one extension, when the airbag unit is in position, engaging the sheathed part of the steering wheel, chracterised by the engagement means carried by the airbag unit being adapted to be brought into engagement with the engagement means carried by the steering wheel, when the air-bag unit is mounted on the steering wheel with a movement in a plane perpendicular to the axis of the steering column.

Preferably the engagement means on the hub of the steering wheel comprise a plurality of upstanding supports, each carrying a projection having an under-surface which extends perpendicularly to the axis of the steering column and having said faces which face towards the steering column and the engagement means on the air-bag unit comprise a plurality of depending legs, each carrying a projection having an upper surface which extends perpendicularly to the axis of the steering column and having said faces which face away from the steering column.

Advantageously one set of engagement means are provided with struts extending from the free edge of each projection to the means carrying the projection.

In an alternative embodiment the hub defines two spaced apart walls having channels therein, one side wall of each channel defining the engagement means on the hub of the steering wheel, and the air-bag unit is provided with engagement means in the form of flanges engageable with said channels.

Preferably the movement in a plane perpendicular to the axis of the steering column is effected by sliding the engagement means carried by the airbag with respect to the engagement means carried by the steering wheel.

Conveniently the air-bag unit, when mounted on the steering wheel is moveable axially of the steering column a spring being located between the airbag unit and the steering wheel, to provide a spring force resisting the axial movement of the air-bag unit.

Preferably the spring force provided by the spring 2-6 N.

Conveniently electrical contact means which form part of an electrical circuit are provided, so that depression of the air-bag unit against the spring completes the electrical circuit.

In order that the invention may be more readily understood, and so that further features thereof may be appreciated, the invention will now be described, by way of example, with reference to the accompanying drawings in which:
Figure 1 (a) is a sectional side view of part of a steering wheel and an airbag unit in an un-engaged condition;
Figure 1 (b) is a sectional side view of part of the steering wheel and airbag unit in an aligned condition;
Figure 1 (c) is a section side view of part of the steering wheel and airbag unit when in an engaged condition;
Figure 2 (a) is an enlarged, diagrammatic sectional side view of part of an alternative embodiment of the steering wheel and air-bag unit as shown in Figure 1 (a) in an unengaged position;
Figure 2 (b) is an enlarged, diagrammatic sectional side view of the steering wheel and air-bag unit as shown in Figure 2 (a) in an aligned condition;
Figure 2 (c) is an enlarged, diagrammatic sectional side view of the apparatus as shown in Figure 2 (a); in an engaged condition
Figure 3 (a) is an enlarged perspective view of the engagement means carried by a steering wheel and an airbag unit of the type described with reference to Figure 2;
Figure 3 (b) is a perspective view of the engagement means of Figure 3 (a) in an aligned condition;
Figure 3 (c) is a perspective view of the engagement means of Figure 3 (a) in an engaged condition; and
Figure 4 is a schematic view from above of an airbag unit, as described in Figure 2, in position within the steering wheel, and
Figure 5 is sectional side view of part of the airbag unit and steering wheel shown in Figure 4

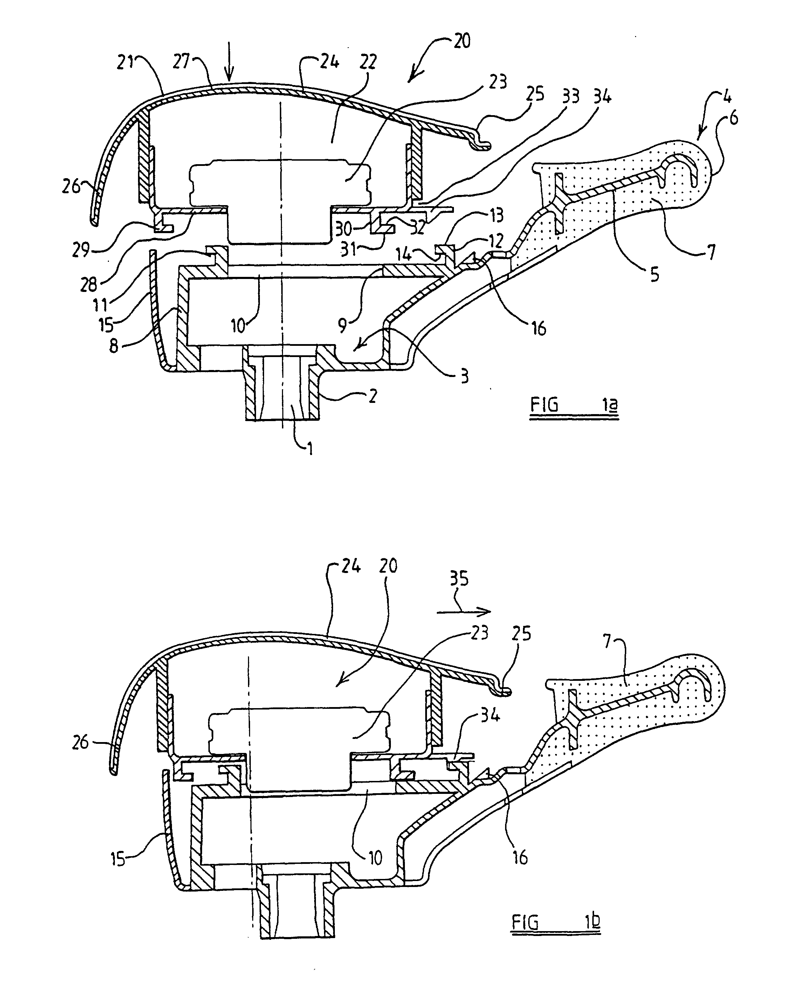

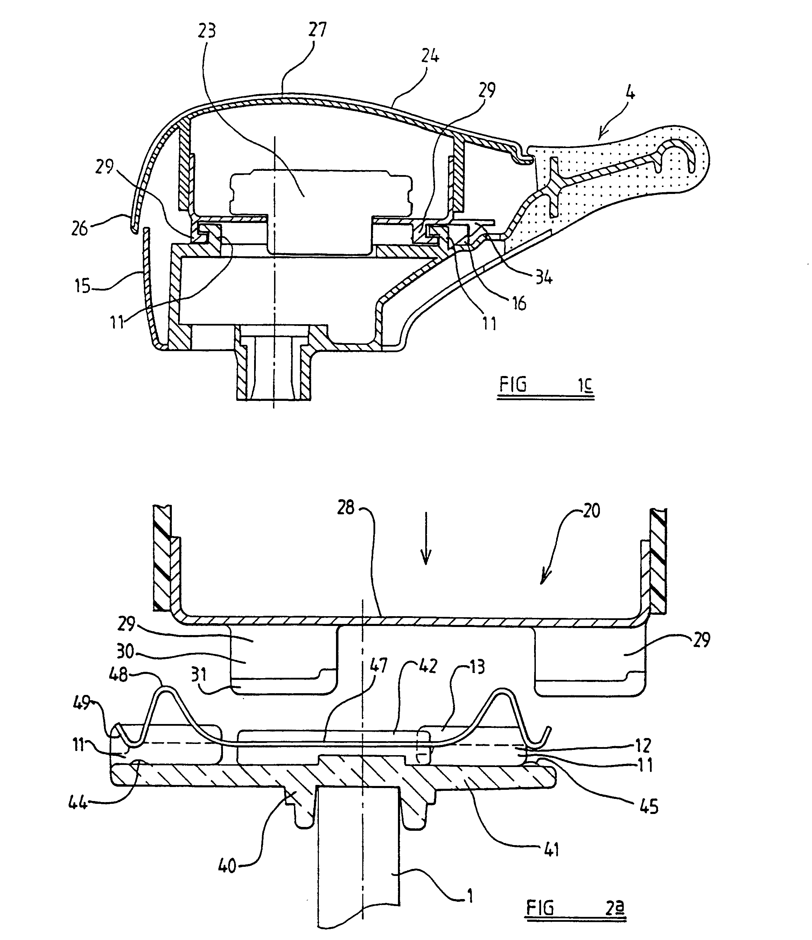

Referring initially to Figure 1 of the accompanying drawings, there is shown a steering column 1. The upper part of the steering column 1 is received within a cylindrical boss 2 forming part of the hub 3 of a steering wheel 4. The hub 3 supports a series of radially extending spokes 5 which terminate at the rim 6 of the steering wheel. The outer part of the steering wheel is sheathed with a resilient material 7.

The hub 3 of the steering wheel 2 comprises a hollow housing 8 with a planar upper surface 9 extending perpendicularly to the axis of the steering column 1. The upper surface 9 is provided with an opening 10 which provides access to the interior of the housing 8.

The upper surface 9 of the housing 8 is provided with engagement means 11 constituted by a plurality of upstanding supports 12 each carrying a projection 13 extending parallel to the upper surface 9 of the housing 8. Each projection 13 extends in a common direction relative to the respective support 12. In Figure 1 each projection extends to the left. The undersurfaces 14 of the projections 13 all lie within a common plane which is perpendicular to the axis of the steering column 1. The under-surface 14 faces towards the steering column in a direction parallel to the axis of the steering column. The hub 3 of the steering wheel 2 is provided with a masking wall 15 which substantially surrounds the side parts of the housing 8.

The upper surface 9 of the housing 8 is provided with locking means in the form of an upstanding substantially triangular catch 16 having one face extending perpendicular to the upper surface 9 of the housing 8 and another face inclined at 45° thereto.

An airbag unit 20 is provided comprising a housing 21 defining a cavity 22. A gas generator 23 is received within the cavity 22 with part of the gas generator 23 protruding beneath the under-surface of the housing 21. The gas generator 23 is associated with an airbag (not shown) which is initially located in the cavity 22. The upper part of the cavity 22 is closed by a cover 24. The cover 24 extends, in a first extension 25, beyond one wall of the housing 21 towards the sheathed outer part of the steering wheel 4. The cover also extends, in a second extension 26, beyond another wall of the housing 21 towards the masking wall 15 carried by the hub 3.

The part of the cover 24 located over the cavity 22 is provided with a line of mechanical weakness 27 to enable the cover 24 to open during inflation of the airbag.

The under-surface 28 of the airbag unit 20 is provided with engagement means 29 adapted to engage the engagement means 11 carried by the hub 3 of the steering wheel 4. The engagement means 29 on the airbag unit 20 comprise a plurality of depending legs 30 each carrying a projection 31. The projections 31 extend parallel with the under-surface 28 of the airbag unit 20 in the opposite direction to the projections 13 of the engagement means 11 carried by the steering wheel 4. The upper surfaces 32 of the projections 31 lie within a common plane extending perpendicularly to the axis of the steering column 1. The upper surfaces 32 face away from the steering column in a direction parallel to the axis of the steering column.

The airbag unit 20 is provided with a flexible extension 33 aligned with its under-surface 28. The flexible extension 33 carries locking means, corresponding to those carried by the steering wheel, in the form of a substantially triangular depending stop 34. The stop 34 has one face perpendicular to the under surface 28 of the airbag unit 20 and one face inclined at 45° thereto.

When the airbag unit 20 is to be mounted onto the hub 3 of the steering wheel 4 initially the airbag unit 20 is located in a position above the hub 3 with the engagement means 29 of the airbag unit 20 offset from the engagement means 11 carried by the hub 3, as shown in Figure 1 (a).

Subsequently, the airbag unit 20 is moved in a direction parallel to the axis of the steering column 1. The protruding part of the gas generator passes through the opening 10 in the upper surface 9 of the housing 8. This is the condition illustrated in Figure 1 (b).

Subsequently, the airbag unit 20 is moved in a plane perpendicular to the axis of the steering column 1 in the direction of arrow 35. This movement causes the upper surfaces 32 of the projections 31 of the engagement means 29 carried by the airbag unit 20 to be brought into alignment and engagement with the under-surfaces 14 of the projections 13 of the engagement means 11 carried by the hub 3.

During this movement the inclined surface of the stop 34 carried by the airbag unit 20 engages the inclined surface of the catch 16 carried by the hub 3. Further movement causes the inclined surface of the stop 34 carried by the airbag unit 20 to ride up the inclined surface of the catch 16 carried by the hub 3 with the flexible extension 33 flexing. Subsequently, the flexible extension 33 returns to its original state causing the perpendicular surface of the stop 34 carried by the airbag unit to come into engagement with the perpendicular surface of the catch 16 carried by the hub. Thus the airbag unit 20 is secured in position. When the airbag unit 20 has been secured in position in this way, the first extension 25 of the cover 24 of the airbag unit 20 engages the sheath 7 covering the outer part of the steering wheel 4 and the second extension 26 of the cover 24 of the airbag unit engages the masking wall 15 carried by the hub 3. This is the condition shown in Figure 1 (c).

When a vehicle, in which the airbag unit 20 is mounted, is subjected to an impact, the gas generator 23 is activated, inflating the airbag 1. The cover 24 breaks in the region of the line of mechanical weakness 27, permitting the airbag to escape and become fully inflated. The airbag continues inflating and the fabric of the airbag has considerable momentum directed axially away from the steering wheel 4. When the airbag is fully inflated, this momentum applies a substantial force to the gas generator 23. The force is transferred to the engagement means 11 and 29 which are strong enough to withstand the forces applied.

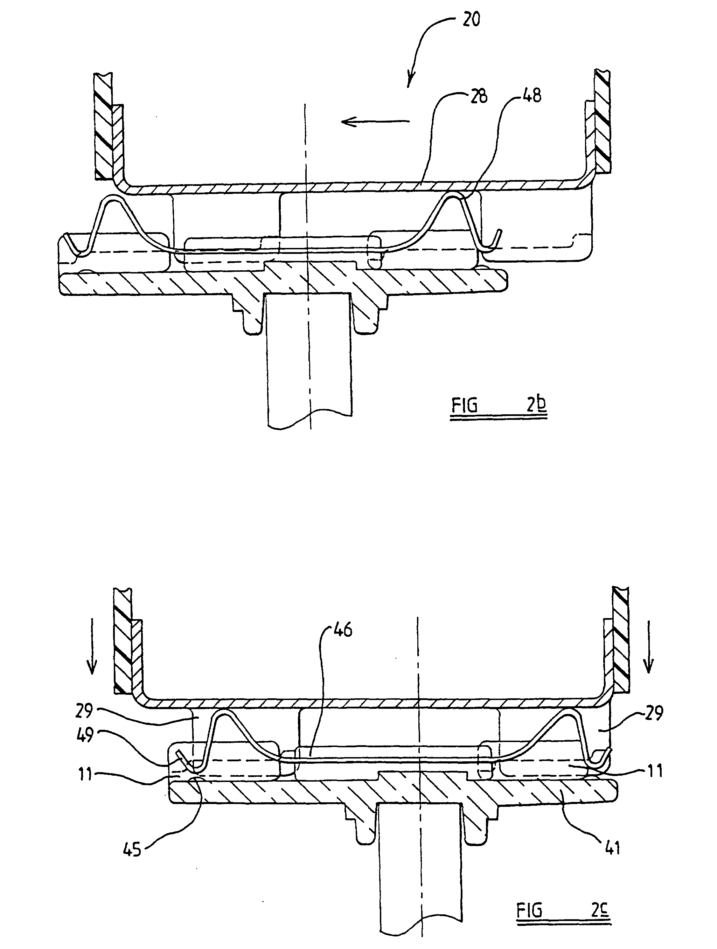

Figure 2 illustrates an airbag arrangement similar to that shown in Figure 1. Similar parts are given like references and subsequently will not be redescribed.

In Figure 2a there is shown a steering column 1. The upper part of the steering column is received within a socket 40. The socket is canned on the under-surface of a plate 41 which extends perpendicular to the axis of the steering column 1. The plate supports two elongate blocks 42, 43 which are positioned adjacent to one another in the central region of the upper surface of the plate 41 forming a channel. The upper surface of the plate 41 is provided with at its extremities a plurality of electrical contacts 44, 45. The upper surface of the plate 41 also supports engagement means 11 comprising upstanding supports 12 each carrying a projection 13 extending parallel to the upper surface of the plate 41.

An airbag unit 20 is provided. The under-surface 28 of the airbag unit 20 is provided with engagement means 29 adapted to engage the engagement means 11 carried by the steering wheel 4. The engagement means 29 comprise a plurality of depending legs 30 each carrying a projection 31 which extends parallel with the undersurface 28 of the airbag unit 20.

A spring 46 formed from steel strip or a similar material is provided. The spring has a linear central region 47. Adjacent each of the opposed ends of the spring the strip is bent upwards to form an inclination inclined at 45° to the horizontal. The inclination terminates in a peak 48. Beyond the peak the spring strip is inclined downwardly, the inclined parts of the strip thus forming an inverted "V" shape. Upon reaching the level of the linear part of the strip downwardly inclined part of the strip is provided with a curved region forming an upturned lip 49. The spring is located with its central region 47 being positioned between the two elongate blocks 42, 43 above the upper surface of the plate 41.

When the airbag unit 20 is moved parallel to the axis of the steering column 1 to align the engagement means 29 carried by the airbag unit with the engagement means 11 carried by the steering wheel, the peaks 48 of the inverted "V's" on the spring 46 come into contact with the undersurface 28 of the airbag unit. This is the condition as seen in Figure 2b.

A subsequent movement in a plane perpendicular to the axis of the steering column 1 causes the engagement means 29 carried by the airbag unit to engage the engagement means 11 carried by the hub.

A movement of the airbag unit 20 parallel to the axis of the steering column 1 will be effected against a spring force of 2-6 N provided by the spring. the movement will cause the upturned lips 49 of the spring 46 to come into contact with the electrical contacts 45 carried by the plate 41. This contact will complete an electric circuit and activate a horn.

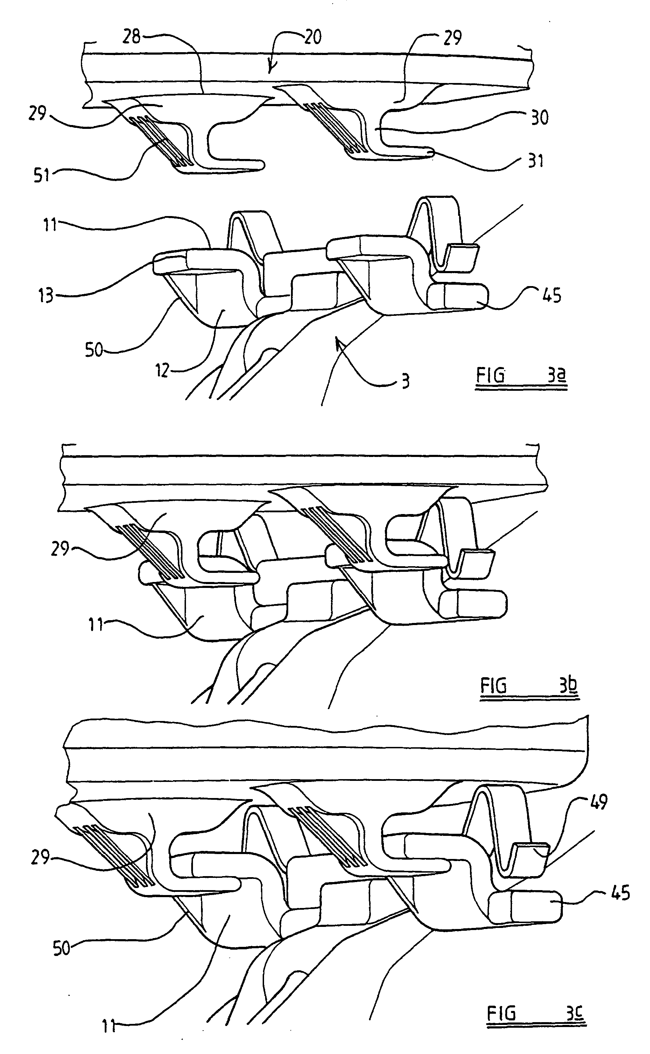

Figure 3 shows one preferred embodiment of an airbag arrangement of the type shown in Figure 2 to illustrate some details of that embodiment. Similar parts have been given like reference numerals and subsequently will not be redescribed.

A strut 50 is provided attached to the outer surface of one side of the engagement means 11 carried by the hub 3 of the steering wheel. The strut 50 extends between the lower fixed end of the upstanding support 12 and the free end of the projection 13 which extends parallel the upper surface of the hub 3.

The engagement means 29 provided on the airbag unit 20 carry substantially triangular reinforcements 51 to reinforce the legs 30. Each reinforcement covers the entire width of the depending leg 30 of the engagement means 29 and extends from the junction between the depending leg 30 and the projection 31 to the under-surface 28 of the airbag unit, forming an inclined outer surface.

Electrical contacts 45 (only one is visible in Figure 3) are provided. Each contact is mounted on a projection 52 which extends horizontally from the plate 41 adjacent to the engagement means 11 carried by the hub 3 of the steering wheel 4. The contacts 45 are aligned with the upturned lips 49 of the spring.

A downward movement of the airbag unit from the position illustrated in Figure 3a along the axis of the steering column 1 will bring the engagement means 11 and 29 carried by both the airbag and the steering wheel into the aligned condition as shown in Figure 3b. In this aligned condition, the upper surface 32 of the projection 31 of the engagement means 29 carried by the airbag unit and the under-surface 14 of the projection 13 of the engagement means 11 carried by the steering wheel lie in adjacent planes.

A movement of the airbag unit in a plane perpendicular to the steering column 1 will bring the engagement means 11 and 29 into the engaged condition shown in Figure 3c. A subsequent movement in the same plane will bring one outside edge of the engagement means carried by the airbag unit into contact with the strut 50 joining the upstanding support and projection of the engagement means 11 carried by the steering wheel. Thus the strut prevents an excessive movement of the airbag unit.

A subsequent movement of the airbag unit parallel to the axis of the steering column 1 will bring the upturned lip 49 of the spring 46 into contact with the electrical contact 45 adjacent to the engagement means 11 carried by the steering wheel. A connection between the spring 46 and the electrical contact 45 will complete an electrical circuit and activate a horn.

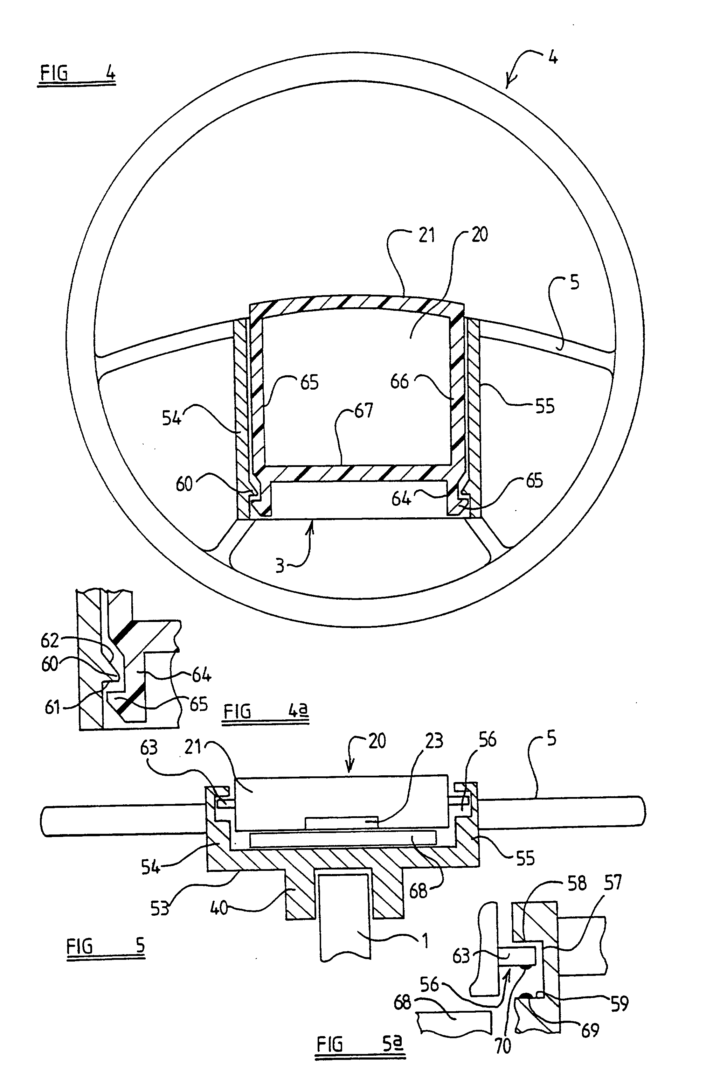

Figures 4 and 5 illustrate another similar airbag unit arrangement and as such similar components have been given like reference numerals and subsequently will not be redescribed.

The upper part of a steering column 1 is received within a cylindrical boss 2 forming part of the hub 3 of the steering wheel 4. The hub supports a series of radially extending spokes which terminate at the rim of the steering wheel.

The hub 3 comprises a plate 53 with two parallel spaced-apart upstanding side walls extending parallel to the axis of the steering column. The inwardly directed face of each of the two side walls 54, 55 is provided with a substantially 'U' shaped channel 56, having a base 57 and two opposed substantially planar side walls 58, 59, extending along the length of the wall, parallel to the upper surface of the plate and perpendicularly to the axis of the steering column 1. The side walls 58, 59 lie in spaced apart planes that are perpendicular to the axis of the steering column. The upper side wall 58 faces towards the steering column. Each lower side wall 59 is provided with an electrical contact 69.

The side walls 58, 59 cany, adjacent to the end wall, a substantially triangular stop 64. The stop 64 has a face which extends perpendicularly to the inside surface of the side wall 58, 59 and a face which is inclined at 45° thereto.

An air bag unit 20 is provided. The airbag unit 20 comprises a substantially rectangular housing 21, the housing 21 containing an airbag (not shown) and associated gas generator 23.

Two opposed walls of the airbag housing 21 each support a substantially rectangular flange 63 extending perpendicularly to the axis of the steering column. Each flange 63 is dimensioned to fit within the channel 56 provided on the inside face of one of the side walls 54, 55 of the housing 52. Each flange 63 is provided on its under surface with an electrical contact 70.

The airbag housing 21 is provided with a flexible extension 64 on each of its side walls 65, 66. The extension 64 extends substantially in alignment with the side wall, past the end wall 67 of the airbag housing 21 . Each flexible extension 64 is provided with, on its outer face, adjacent its free end, with a substantially triangular stop 65. The stop 65 has one face 66 running perpendicular to the surface of the flexible extension 55 and another face 47 inclined at 45° thereto.

When the airbag unit 20 is to be duly fitted into the steering wheel 4, a spring 68 is inserted between the two side walls 54, 55 carried by the hub 3. The flanges 63 provided on the airbag unit 20 are aligned with the channels 56 provided on the steering wheel 4. The upper surface of each flange thus lies in a plane which is perpendicular to the axis of the steering column, and faces away from the steering column. When the airbag unit 20 is moved in a direction perpendicular to the axis of the steering column 1, the flanges 60 provided on the airbag unit 20 will engage the channels 56 provided on the steering wheel 4 and further movement will move the airbag unit 20 into a position where the flanges 60 are inside the channels 58. The upper surfaces of the flanges 60 and the under-surface of the upper side wall 58 of the channel 56 are aligned and in adjacent planes.

Continued movement in the same direction will cause the inclined face 67 of each of the stops 65 carried by the airbag unit 20 to come into contact with the inclined face 62 of the respective catch 60 carried by the steering wheel 4. A subsequent movement will cause the inclined faces of the stops 65 carried by the airbag unit 20 to ride up the inclined faces of the catches 60 carried by the steering wheel 4 causing the flexible extensions 64 to flex.. After a further short movement the flexible extensions 64 will then flex back to their original positions so that the perpendicular faces of the stops 65 carried by the airbag unit will engage the perpendicular faces of the catches 60 on the hub thus securing the air-bag unit in position.

A movement of the airbag unit parallel to the axis of the steering column 1 will bring the under surface of the airbag unit 20 into contact with the spring 68. Further movement in the same direction will compress the spring 68 bringing the electrical contact 70 carried by the under surface of the flange 63 into contact with the electrical contact 69 carried by the lower side wall 59 of the channel 56, thus completing an electrical circuit to activate a horn function. The nature of the stops and catches permit the movement of the airbag unit parallel with the axis of the steering column without the stops and catches being disengaged.

During inflation of the airbag, the axially outwardly directed force which is applied to the gas generator will cause the upper surface of each of the flanges 63 carried by the airbag unit 20 to engage the under-surface of the upper side wall 58 of the channel 56. The flange and the side wall are sufficiently strong to withstand the applied load.

Although the described embodiments relate to the airbag unit 20 being mounted onto the hub 3 of the steering wheel 4 with a somewhat linear movement in a plane perpendicular to the axis of the steering column, it is to be understood that it would be possible to mount the airbag unit to the hub of the steering wheel with a substantially angular movement in a plan perpendicular to the steering column.

## Claims

1. An airbag arrangement comprising: a steering wheel (1) having a rim (4) and a hub (2), an exterior part of the steering wheel being sheathed with a resilient material (7), the steering wheel being adapted to be mounted by means of the hub to a steering column; an airbag unit (20) having a housing, the housing containing a gas generator (23) and airbag (22), and having a cover (24) with at least one extension (25) which extends beyond the housing; engagement means (11,12) on the hub of the steering wheel and co-operating engagement means (29,30) on the airbag unit; the engagement means on the hub having faces which face towards the steering column in the direction of the axis of the steering column; the engagement means carried by the airbag unit having faces which face away from the steering column in the direction of the axis of the steering column; wherein locking means (16,34) are provided to secure the airbag unit in position when mounted on the steering wheel, the locking means comprise two elements (16,34) adapted to engage each other to secure the air-bag in position, the elements being carried respectively by the steering wheel and the air-bag unit, one element (34) being carried by a flexible extension to provide a snap action, the said at least one extension (25), when the airbag unit is in position, engaging the sheathed part (7) of the steering wheel, **characterised by** the engagement means (29,30) carried by the airbag unit being adapted to be brought into engagement with the engagement means (11,12) carried by the steering wheel, when the air-bag unit is mounted on the steering wheel with a movement in a plane perpendicular to the axis of the steering column.

2. The air-bag arrangement according to Claim 1 wherein the engagement means on the hub of the steering wheel comprise a plurality of upstanding supports, each carrying a projection having an under-surface which extends perpendicularly to the axis of the steering column and having said faces which face towards the steering column and the engagement means on the air-bag unit comprise a plurality of depending legs, each carrying a projection having an upper surface which extends perpendicularly to the axis of the steering column and having said faces which face away from the steering column.

3. The air-bag arrangement of Claim 2 wherein one set of engagement means are provided with struts extending from the free edge of each projection to the means carrying the projection.

4. The air-bag arrangement according to Claim 1 wherein the hub defines two spaced apart walls having channels therein, one side wall of each channel defining the engagement means on the hub of the steering wheel, and the airbag unit is provided with engagement means in the form of flanges engageable with said channels.

5. The airbag arrangement according to any one of the preceding claims wherein the movement in a plane perpendicular to the axis of the steering column is effected by sliding the engagement means carried by the airbag with respect to the engagement means carried by the steering wheel.

6. The airbag arrangement according to any of the preceding claims wherein the air-bag unit, when mounted on the steering wheel is moveable axially of the steering column, a spring being located between the airbag unit and the steering wheel to provide a spring force resisting the axial movement of the air-bag unit.

7. The airbag arrangement according to Claim 6 wherein the spring force provided by the spring is 2 - 6 N.

8. The airbag arrangement according to Claim 6 or 7 wherein electrical contact means which form part of an electrical circuit are provided, so that depression of the airbag unit against the spring completes an electrical circuit.

## Patentansprüche

1. Anordnung für einen Airbag, mit einem Lenkrad (1) mit einem Kranz (4) und einer Nabe (2), wobei ein äußeres Teil des Lenkrades mit einem elastischen Material (7) ummantelt ist, und das Lenkrad so ausgeführt ist, dass es mittels der Nabe auf einer Lenksäule befestigbar ist; einer Airbageinheit (20) mit einem Gehäuse, wobei das Gehäuse einen Gaserzeuger (23) und einen Airbag (22) beinhaltet, und einen Deckel (24) mit wenigstens einem Vorsprung (25), welcher sich über das Gehäuse hinaus erstreckt; Verriegelungsmitteln (11, 12) an der Nabe des Lenkrades und korrespondierenden Verriegelungsmitteln (29, 30) an der Airbageinheit; wobei die an der Nabe liegenden Verriegelungsmittel Flächen aufweisen, welche zur Lenksäule gerichtet in die Richtung der Achse der Lenksäule weisen; wobei die von der Airbageinheit getragenen Verriegelungsmittel Flächen aurweisen, welche von der Lenksäule hinweg in die Richtung der Achse der Lenksäule weisen; wobei Rastmittel (16, 34) vorgesehen sind, um die Airbageinheit in ihrer Lage zu sichern, wenn diese auf dem Lenkrad befestigt ist, wobei die Rastmittel (16, 34) zwei Elemente beinhalten, die so gestaltet sind, dass sie ineinander einrasten, um den Airbag in seiner Lage sicher zu halten, wobei sich die Elemente jeweils am Lenkrad und an der Airbageinheit befinden, ein Element (34) sich an einer flexiblen Verlängerung befindet, um eine Einschnappbewegung auszuführen, wobei der mindestens eine Vorsprung (25) in den ummantelten Teil (7) des Lenkrades einrastet, wenn die Airbageinheit sich in ihrer Lage befindet, **dadurch gekennzeichnet, dass** die von der Airbageinheit getragenen Verriegelungsmittel (29, 30) so gestaltet sind, dass sie in Eingriff mit den vom Lenkrad getragenen Verriegelungsmitteln (11, 12) gebracht werden, wenn die Airbageinheit mit einer Bewegung in einer zur Achse der Lenksäule senkrecht stehenden Ebene auf das Lenkrad aufgebracht wird.

2. Anordnung nach Anspruch 1, **dadurch gekennzeichnet, dass** das Verriegelungsmittel an der Nabe des Lenkrades aus einer Vielzahl von aufrechten Stützen besteht, wobei jede von diesen einen Vorsprung aufweist, welcher eine unten liegende Fläche hat, die sich senkrecht zu der Achse der Lenksäule erstreckt und die zur Lenksäule weisenden Flächen aufweist, und das Verriegelungsmittel der Airbageinheit aus einer Vielzahl von davon abgehenden Beinen besteht, wobei jedes einen Vorsprung mit einer oben liegenden Fläche aufweist, die sich senkrecht zur Achse der Lenksäule erstreckt und die Flächen aufweist, welche von der Lenksäule weg weisen.

3. Anordnung nach Anspruch 2, **dadurch gekennzeichnet, dass** ein Satz von Verriegelungsmitteln mit Streben versehen ist, welche sich von der freien Kante eines jeden Vorsprungs zu dem Mittel erstrecken, welches den Vorsprung trägt.

4. Anordnung nach Anspruch 1, **dadurch gekennzeichnet, dass** die Nabe zwei von einander beabstandete Wände mit eingebrachten Kanälen festlegt, wobei eine Seitenwand eines jeden Kanals das Verriegelungsmittel auf der Nabe des Lenkrades bildet, und die Airbageinheit mit Verriegelungsmitteln in Form von Flanschen versehen ist, welche mit diesen Kanälen in Eingriff bringbar sind.

5. Anordnung nach einem der vorhergehenden Ansprüche, **dadurch gekennzeichnet, dass** die Bewegung in einer senkrecht zur Achse der Lenksäule stehenden Ebene durch Gleiten der durch den Airbag getragenen Verriegelungsmittel in Bezug auf die vom Lenkrad getragenen Verriegelungsmittel bewirkt wird.

6. Anordnung nach einem der vorhergehenden Ansprüche, **dadurch gekennzeichnet, dass** die Airbageinheit im am Lenkrad angebauten Zustand in axialer Richtung der Lenksäule beweglich ist, wobei zwischen der Airbageinheit und dem Lenkrad eine Feder angeordnet ist, um eine Federkraft zu erzeugen, die der Axialbewegung der Airbageinheit entgegenwirkt.

7. Anordnung nach Anspruch 6, **dadurch gekennzeichnet, dass** die durch die Feder erzeugte Federkraft 2 - 6 N beträgt.

8. Anordnung nach Anspruch 6 oder 7, **dadurch gekennzeichnet, dass** elektrische Kontaktmittel vorgesehen sind, welche einen Teil eines elektrischen Stromkreises bilden, in der Form, daß das Hinunterdrücken der Airbageinheit gegen die Feder den elektrischen Stromkreis schließt.

## Revendications

1. Un agencement de coussin gonflable de sécurité, comprenant : un volant (1) ayant une jante (4) et un moyeu (2), une partie extérieure du volant étant gainée d'un matériau (7) élastique, le volant étant adapté pour être monté à l'aide du moyeu sur une co lonne de direction ; une unité de coussin gonflable de sécurité (20) comportant un boîtier, le boîtier contenant un générateur de gaz (23) et un coussin gonflable de sécurité (22), et ayant un couvercle (24) ayant au moins une extension (25) s'étendant au-delà du boîtier ; des moyens de contact (11, 12), prévus sur le moyeu du volant, et des moyens de mise en prise (29, 30), coopérant, prévus sur l'unité de coussin gonflable de sécurité ; les moyens de mise en prise situés sur le moyeu ayant des faces tourn ées en direction de la colonne de direction, dans la direction de l'axe de la colonne de direction ; des moyens de mise en prise portés par l'unité de coussin gonflable de sécurité ayant des faces orientées à l'opposé de la colonne de direction, dans la di rection de l'axe de la colonne de direction ; dans lequel des moyens de verrouillage (16, 34) sont prévus pour fixer l'unité de coussin gonflable de sécurité en position, une fois montée sur le volant, les moyens de verrouillage comprennent deux éléments (16, 34) adaptés pour venir en prise l'un avec l'autre pour fixer le coussin gonflable de sécurité en position, les éléments étant portés respectivement par le volant et par l'unité de coussin gonflable de sécurité, un élément (34) étant porté par une exten sion flexible pour fournir une action d'encliquetage, ladite au moins une extension (25), lorsque l'unité de coussin gonflable de sécurité est en position, venant en prise avec la partie (7) gainée du volant, **caractérisé par le fait que** les moyens de mise en prise (29, 30) portés par l'unité de coussin gonflable de sécurité sont adaptés pour être mis en prise avec les moyens de mise en prise (11, 12) portés par le volant, lorsque l'unité de coussin gonflable de sécurité est montée sur le volant, avec un mouvement se faisant dans un plan perpendiculaire à l'axe de la colonne de direction.

2. L'avancement de coussin gonflable de sécurité selon la revendication 1, dans lequel les moyens de mise en prise situés sur le moyeu du volant comprennent une pluralité de supports montants, chacun portant une saillie ayant une face inférieure s'étendant perpendiculairement à l'axe de la colonne de direction et ayant lesdites faces tournées vers la colonne de direction, et les moyens de mise en prise situés sur l'unité de c oussin gonflable de sécurité comprennent une pluralité de pattes dépendantes, chacune portant une saillie ayant une face supérieure s'étendant perpendiculairement à l'axe de la colonne de direction et lesdites faces ayant des faces orientées à l'opposé de la colonne de direction.

3. L'agencement de coussin gonflable de sécurité selon la revendication 2, dans lequel un jeu de moyens de mise en prise est prévu avec des tétons s'étendant depuis le bord libre de chaque saillie sur les moyens portant la saillie.

4. L'agencement de coussin gonflable de sécurité selon la revendication 1, dans lequel le moyeu définit deux parois espacées ayant en leur sein des canaux, une paroi latérale de chaque canal définissant les moyens de mise en prise sur le moyeu du volant e t l'unité de coussin gonflable de sécurité étant pourvue de moyens de mise en prise se présentant sous la forme de brides ou rebords, susceptibles d'être mises en prise avec lesdits canaux.

5. L'agencement de coussin gonflable de sécurité selon l'une quelc onque des revendications précédentes, dans lequel le déplacement dans un plan perpendiculaire à l'axe de la colonne de direction est effectué par coulissement des moyens de mise en prise portés par le coussin gonflable de sécurité, par rapport aux moyens d e mise en prise portés par le volant.

6. L'agencement de coussin gonflable de sécurité selon l'une quelconque des revendications précédentes, dans lequel l'unité de coussin gonflable de sécurité, une fois montée sur le volant, est déplaçable dans la direct ion axiale de la colonne de direction, un ressort étant placé entre l'unité de coussin gonflable de sécurité et le volant, pour fournir une force élastique résistant au déplacement axial de l'unité de coussin gonflable de sécurité.

7. L'agencement de couss in gonflable de sécurité selon la revendication 6, dans lequel la force élastique fournie par le ressort est d'une valeur de 2 à 6 N.

8. L'agencement de coussin gonflable de sécurité selon la revendication 6 ou 7, dans lequel des moyens de contact électriques faisant partie d'un circuit électrique sont prévus de manière que l'enfoncement de l'unité de coussin gonflable à l'encontre de la force exercée par le ressort complète un circuit électrique.
